# EUROPEAN PATENT SPECIFICATION

(11) **EP 2 826 667 B1**
(45) Date of publication and mention of the grant of the patent: **05.06.2019**
(21) Application number: 14175456.4
(22) Date of filing: 02.07.2014
(51) Int. Cl.: F21S 41/143, F21S 41/255, F21S 41/663, B60Q 1/14

(54) **Vehicle headlamp and vehicle headlamp system**
Fahrzeugscheinwerfer und Fahrzeugscheinwerfersystem
Phare de véhicule et système de phare de véhicule

(30) Priority: 03.07.2013 JP 2013139934
(43) Date of publication of application: 21.01.2015
(73) Proprietor: Stanley Electric Co., Ltd., Meguro-ku Tokyo 153 (JP)
(72) Inventor: Sekiguchi, Tatsuya, Tokyo, 153-8636 (JP); Kaizumi, Yasuaki, Tokyo, 153-8636 (JP); Matsuzaki, Makio, Tokyo, 153-8636 (JP)
(74) Representative: Emde, Eric

(56) References cited:
- EP-A1- 2 574 502
- EP-A2- 2 280 215
- DE-A1-102008 036 193
- DE-A1-102008 044 967

## Description

### BACKGROUND OF THE INVENTION

### Field of the Invention

The present invention relates to a light distribution control technique that controls a light irradiation range in accordance with a travelling direction (turning direction) of a vehicle when the light is irradiated in front of the subject vehicle.

### Description of the Background Art

When driving a vehicle at night, a driver basically checks the area in front of the vehicle by irradiating a high beam from the headlamps, switching to a low beam as necessary, but also often uses the low beam due to the hassle of switching as well as the road environment. Hence, light is irradiated on the upper side above a so-called cutoff line, possibly casting glare onto an oncoming vehicle or preceding vehicle (hereinafter referred to as "forward vehicle"). Thus, as disclosed in JP 4624257 B, for example, in recent years there have been proposed various light distribution control techniques for detecting the position of the lamps (tail lamps or headlamps) of the forward vehicle using an image obtained by taking an image of the forward vehicle by a camera mounted to the subject vehicle, and controlling the irradiation pattern of the high beam to ensure that the position of the forward vehicle is within a shaded range. Such a light distribution control technique is also called ADB (Adaptive Driving Beam) control. This type of control suppresses the glare cast on a forward vehicle and contributes to the improvement of early detection of pedestrians as well as distance visibility.

On the other hand, there are known light distribution control techniques that variably control the irradiation range of light from a headlamp in accordance with the travelling direction when the vehicle is turning. Such a light distribution control technique is also called AFS (Adaptive Front-lighting System) control. This type of control contributes to the improvement of visibility in the travelling direction when a vehicle is turning. In recent years, AFS control is needed to be performed when the ADB control described above is performed. A precedent example related to such a light distribution control technique that performs ADB control together with AFS control is disclosed in JP 2012-162121 A, for example.

In the precedent example according to JP 2012-162121 A described above, an actuator that controls the swivel of a lamp unit in the left-right direction is utilized as specific means for performing AFS control.

Nevertheless, when such mechanical means is used, there is still room for improvement in terms of reliability due to the existence of moving parts and thus a relatively high susceptibility to failure, as well as room for improvement in terms of complexity due to the maintenance required to keep the lamp unit in good working order.

EP 2 574 502 A1 discloses a vehicle headlamp control system and was used as a basis for the preamble of claim 1. According to EP 2 574 502 A1, a predetermined illuminated area is formed within an illumination range including a plurality of partial areas by shining illumination light by a plurality of light sources disposed in a vehicle. In executing a control to swivel shift the predetermined illuminated area within the illumination range, a difference in illuminance between partial areas that lie adjacent to each other and which are contained in the illuminated area is changed before and after the swivel shift.

EP 2 280 215 A2 discloses a motor vehicle headlamp device which has LED-light sources comprising LEDs and primary optical elements that comprise light emitting surfaces. The light sources are arranged in LED-light source-modules that comprise secondary optics. The secondary optics and the light emitting surfaces are synchronized, such that light segments produced from the light source-modules are offset to each other in a horizontal direction, where the light sources are separately controlled.

DE 10 2008 036193 A1 discloses an installation which has first and second lighting modules generating a first dipped beam based light distribution and a second main beam based light distribution. A third lighting module has first and second sets of activated photodiodes distributed along a matrix. A control unit controls photodiodes to generate a third light distribution. The third module is respectively connected with the photodiodes during lighting of a pavement according to the first and second distributions. The first set is differed from the second set by the number and/or position of the photodiodes in the matrix.

DE 10 2008 044967 A1 discloses a device which has a set of semiconductor light sources e.g. LED, forming an LED field, where the sources are arranged linearly next to each other in a set of rows. A projection lens arrangement is arranged in an optical path of light transmitted by the sources. An optical field is arranged in the path between the sources and the arrangement. The optical field has a set of optical imaging elements arranged like a matrix. The elements exhibit square cross section and vertical side walls of the elements of one of the lines are bent.

### SUMMARY OF THE INVENTION

It is therefore an object of the present invention to provide a technique capable of achieving AFS control without using mechanical means.

The vehicle headlamp of an aspect according to the present invention is a vehicle headlamp for forming a low beam that illuminates a relatively lower region of a space in front of a vehicle, as set forth in claim 1.

According to the above configuration, a low beam that illuminates the relatively lower region of the space in front of a vehicle is formed by combining and projecting the first irradiating light and the second irradiating light. At this time, the respective light-emitting devices included in the first light-emitting device array are selectively turned on and off by an external control apparatus in accordance with the travelling direction of the subject vehicle, making it possible to vary the position of a step area of a cutoff line, which is the boundary of an upper end of the low beam in the left-right direction. With this arrangement, an AFS function is achieved without using mechanical means.

Additionally, in the vehicle headlamp described above, the plurality of light-emitting devices of the first light-emitting device array comprises an outer edge shape that includes an edge that obliquely crosses the first direction.

The step area of the cutoff line is generally obliquely set with respect to the horizontal direction but, according to the configuration described above, the outer-edge shapes of the respective light-emitting devices comprise an oblique edge, making it possible to directly form an irradiating light that comprises an oblique step area without using means such as a shade to partially shade the light from the light-emitting device array.

Additionally, in the vehicle headlamp described above, the second irradiating light is preferably formed so that at least a portion thereof is superimposed on an upper end side of the first irradiating light.

With this arrangement, it is easy to position the first irradiating light and the second irradiating light so that no space occurs therebetween.

Additionally, in the vehicle headlamp described above, the second light source apparatus preferably further includes a second light-emitting device array adjacent to the first light-emitting device array in a second direction that crosses the first direction, and the second light-emitting device array preferably comprises a plurality of light-emitting devices disposed along the first direction.

With this arrangement, the width in the up-down direction of the second irradiating light increases in size, making it easier to position the first irradiating light and the second irradiating light.

Moreover, a vehicle headlamp system according to the present invention is provided as set forth in claim 4.

According to the above configuration, without using mechanical means, a vehicle headlamp system capable of achieving AFS control in accordance with the travelling direction of the subject vehicle is provided.

### BRIEF DESCRIPTION OF THE DRAWINGS

Fig. 1A is a plan view schematically showing the configuration of a matrix LED as the light source apparatus of an embodiment.
Fig. 1B is a plan view showing a portion of the matrix LED of Fig. 1A, enlarged.
Fig. 2 is a schematic cross-sectional view showing a configuration example of the light-emitting devices included in the matrix LED.
Fig. 3A is a schematic view showing a configuration example of the lamp unit.
Fig. 3B is a schematic view showing the optical configuration of the lamp unit disclosed in Fig. 3A.
Fig. 4 is a block diagram showing the configuration of a vehicle headlamp system of an embodiment.
Fig. 5A and Fig. 5B are figures for explaining an example of a light distribution pattern formed by the vehicle headlamp system described in the specification.
Fig. 6A and Fig. 6B are another figures for explaining an example of a light distribution pattern formed by the vehicle headlamp system described in the specification.
Fig. 7A and Fig. 7B are another figures for explaining an example of a light distribution pattern formed by the vehicle headlamp system described in the specification.

### DESCRIPTION OF THE PREFERRED EMBODIMENTS

Now, an embodiment of the present invention will be described below with reference to the accompanying drawings.

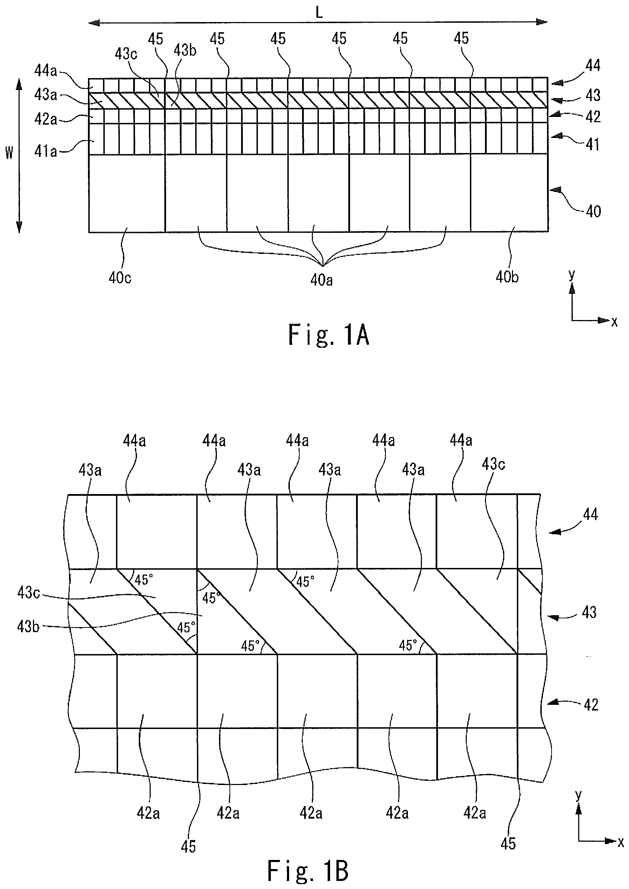

Fig. 1A is a plan view schematically showing the configuration of a matrix LED as the light source apparatus of an embodiment. The matrix LED in the figure is configured to comprise a plurality of light-emitting devices (LEDs) arranged with regularity. Fig. 1A mainly shows the shapes of the light-emitting units of the respective light-emitting devices. The matrix LED in the figure comprises a plurality of light-emitting device arrays 40, 41, 42, 43, and 44. The respective light-emitting device arrays 40 and the like each comprise a plurality of light-emitting devices arranged in a first direction (direction x in the figure). As shown in the figure, the light-emitting units (light-emitting surfaces) of the respective light-emitting devices comprise various sizes and shapes. The matrix LED is rectangular in shape overall, with a long-side length L of 9 mm and a short-side length W of 3 mm, for example.

The light-emitting device array 40 comprises seven light-emitting devices arranged in the first direction. Specifically, the light-emitting device array 40 comprises five light-emitting devices 40a adjacently arranged, one light-emitting device 40b adjacently arranged to one end side of the row made of the five light-emitting devices 40a, and one light-emitting device 40c adjacently arranged to the other end side of the row made of the five light-emitting devices 40a. The five light-emitting devices 40a are mutually equal in shape, surface area, and short-side length (width). Conversely, the respective light-emitting devices 40b and 40c are nearly square in shape, with a wider long-side length than that of the respective light-emitting devices 40a. The light-emitting device 40b and the light-emitting device 40c are mutually equal in shape, long-side length, short-side length (width), and surface area. Note that the number of divisions is not limited to the above since the light-emitting device array 40 only needs to be divided into a plurality with respect to the long side of the matrix LED.

The light-emitting device array 41 comprises 30 light-emitting devices 41a arranged in the first direction. In the figure, only one light-emitting device 41a is representatively denoted with a reference numeral. These 30 light-emitting devices 41a are mutually equal in shape and surface area yet differ in shape and the like from and have a smaller surface area than those of the respective light-emitting devices 40a described above. The respective light-emitting devices 41a of this example are rectangular in shape, extending in a second direction (direction y in the figure) orthogonal to the direction in which they are arranged (direction x in the figure). This light-emitting device array 41 is adjacently arranged to the light-emitting device array 40 in the second direction. The respective widths (lengths in the first direction) of the respective light-emitting devices 41a are one-fourth of the width (length in the first direction) of one adjacent light-emitting device 40a, and one-fifth of the width (length in the first direction) of one light-emitting device 40b or one light-emitting device 40c. Then, the light-emitting devices 41a are correspondingly disposed by fours to the respective light-emitting devices 40a inside the range of the widths thereof, and the light-emitting devices 41a are correspondingly disposed by fives to the respective light-emitting devices 40b and 40c inside the range of the widths thereof. Note that the number of divisions is not limited to the above since the light-emitting devices 41a only need to be divided into a plurality with respect to the light-emitting devices 40a, 40b, and 40c.

The light-emitting device array 42 comprises 30 light-emitting devices 42a arranged in the first direction. In the figure, only one light-emitting device 42a is representatively denoted with a reference numeral. These 30 light-emitting devices 42a are mutually equal in shape and surface area yet differ in shape and the like from and have a smaller surface area than those of the respective light-emitting devices 41a described above. The respective light-emitting devices 42a are square in shape. This light-emitting device array 42 is adjacently arranged to the light-emitting device array 41 in the second direction. The respective widths (lengths in the first direction) of the respective light-emitting devices 42a are one-fourth of the width (length in the first direction) of one adjacent light-emitting device 40a, and one-fifth of the width (length in the first direction) of one light-emitting device 40b or one light-emitting device 40c. Then, the respective light-emitting devices 42a are correspondingly disposed one-to-one with the respective light-emitting devices 41a of the adjacent light-emitting device array 41. Note that the light-emitting devices 42a are arranged in correspondence with the number of light-emitting devices 41a, and therefore the number of light-emitting devices is not limited to the above.

The light-emitting device array 43 comprises 23 parallelogram-shaped light-emitting devices 43a, seven isosceles triangle-shaped light-emitting devices 43b, and seven isosceles triangle-shaped light-emitting devices 43c arranged in the first direction. In the figure, only one light-emitting device 43a, light-emitting device 43b, and light-emitting device 43c are representatively denoted with reference numerals, respectively. This light-emitting device array 43 is adjacently arranged to the light-emitting device array 42 in the second direction. The 23 parallelogram-shaped light-emitting devices 43a are mutually equal in shape and surface area. Similarly, the seven isosceles triangle-shaped light-emitting devices 43b are mutually equal in shape and surface area, and the same holds true for the seven isosceles triangle-shaped light-emitting devices 43c as well. Specifically, in this light-emitting device array 43, one light-emitting device 43c, three or four light-emitting devices 43a, and one light-emitting device 43b are arranged from the right in the figure as a set and disposed inside the range of the width corresponding to one light-emitting device 40b. Next, one light-emitting device 43c, three light-emitting devices 43a, and one light-emitting device 43b are arranged from the right as a set and disposed inside the range of the width corresponding to one light-emitting device 40a. Such an arrangement is repeated with respect to the respective light-emitting devices 40a. Next, one light-emitting device 43c, four light-emitting devices 43a, and one light-emitting device 43b are arranged from the right as a set and disposed inside the range of the width corresponding to one light-emitting device 40c. Note that the light-emitting devices 43a, 43b, and 43c are arranged in correspondence with the number of light-emitting devices 42a, and therefore the number of light-emitting devices is not limited to the above.

The light-emitting device array 44 comprises 30 light-emitting devices 44a arranged in the first direction. In the figure, only one light-emitting device 44a is representatively denoted with a reference numeral. These 30 light-emitting devices 44a are mutually equal in shape and surface area. The respective light-emitting devices 44a are square in shape. This light-emitting device array 44 is adjacently arranged to the light-emitting device array 43 in the second direction. The respective widths (lengths in the first direction) of the respective light-emitting devices 44a are one-fourth of the width (length in the first direction) of one adjacent light-emitting device 40a, and one-fifth of the width (length in the first direction) of one light-emitting device 40b or one light-emitting device 40c. Then, the respective light-emitting devices 44a are correspondingly disposed one-to-one with the respective light-emitting devices 43a or 43c of the adjacent light-emitting device array 43. Note that the light-emitting devices 44a are arranged in correspondence with the number of the light-emitting devices 43a, 43b, and 43c and the widths of the light-emitting devices 40a, 40b, and 40c, and therefore the number of the light-emitting devices is not limited to the above.

Fig. 1B is a plan view showing a portion of the matrix LED of Fig. 1A, enlarged. As shown in the figure, the pair of diagonal angles of each of the parallelogram-shaped light-emitting devices 43a included in the light-emitting device array 43 is 45°. Then, the respective light-emitting devices 43a comprise two parallel sides in the first direction, with one side adjacent to one light-emitting device 42a and the other side adjacent to one light-emitting device 44a. The respective lengths of the two parallel sides in the first direction of the respective light-emitting devices 43a are substantially equal to the widths of the respective adjacent light-emitting devices 42a and 44a. On the other hand, the two base angles of each of the triangle-shaped light-emitting devices 43b and 43c included in the light-emitting device array 43 are 45°. When one light-emitting device 43b and one light-emitting device 43c are combined, the shape and surface area are substantially the same as those of one light-emitting device 43a. In other words, the combined result of one light-emitting device 43b and one light-emitting device 43c is a substitute for one light-emitting device 43a.

The matrix LED of this embodiment, for process convenience, is provided with a dividing line 45 at each width equivalent to four light-emitting devices 44a (that is, at each width equivalent to one light-emitting device 40a) or at each width equivalent to five light-emitting devices 44a (that is, at each width equivalent to one light-emitting device 40b) on both sides. Four or five light-emitting devices 44a are disposed inside each of the ranges between two dividing lines 45, with the light-emitting devices 43a correspondingly associated with three or four of these light-emitting devices 44a one by one, and one light-emitting device 43c correspondingly associated with the remaining one light-emitting device 44a. Similarly, four or five light-emitting devices 42a are disposed inside each of the ranges between two dividing lines 45, with the light-emitting devices 43a correspondingly associated with three or four of these light-emitting devices 42a one by one, and one light-emitting device 43b correspondingly associated with the remaining one light-emitting device 42a. Note that, on both sides of the matrix LED, the light-emitting devices 43a are correspondingly associated with four of the five light-emitting devices 44a one by one and one light-emitting device 43c is correspondingly associated with the remaining one light-emitting device 44a; and the light-emitting devices 43a are correspondingly associated with four of the five light-emitting devices 42a one by one and one light-emitting device 43b is correspondingly associated with the remaining one light-emitting device 42a.

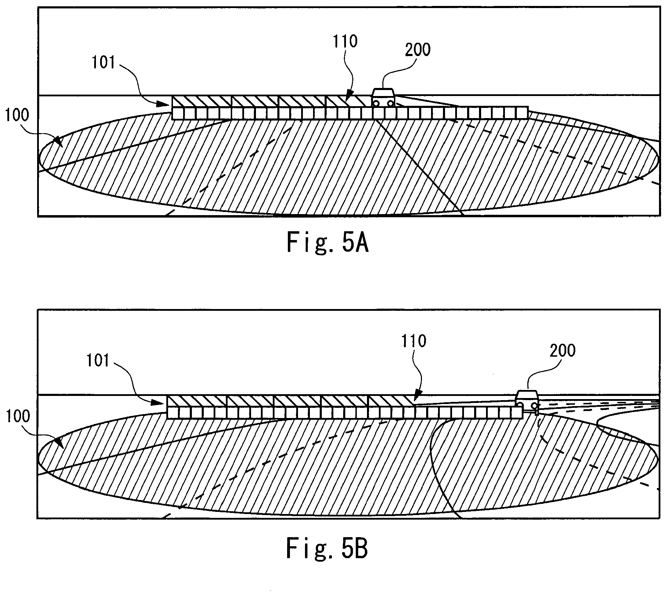

The vehicle headlamp is configured using this matrix LED, thereby making it possible to respectively achieve the AFS function and the ADB function. Specifically, the respective light-emitting devices of the matrix LED are selectively turned on and the emitted light thereof is projected in the space in front of the subject vehicle by a lens, making it possible to form irradiating light such as illustrated in Figs. 5A-5B, Figs. 6A-6B, and Figs. 7A-7B described later. Specifically, the light-emitting device arrays 40, 41, and 42 can be used to form a high beam that illuminates the relatively upper region of the space in front of the vehicle as well as a beam by ADB control. Specifically, the ADB function is achieved by selectively turning on and off the respective light-emitting devices 40a, 40b, 41a, and 42a included in the respective light-emitting device arrays, in accordance with the position where the forward vehicle exists.

Further, in the three adjacent light-emitting device arrays 40, 41, and 42 (refer to Fig.1A), the respectively included light-emitting devices are set so that the surface areas and widths thereof differ. The light emitted from these is projected by the lens, thereby causing the light from the light-emitting device array 40 to irradiate in the relatively upper region of the space in front of the subject vehicle, the light from the light-emitting device array 41 to irradiate in the lower area thereof, and the light from the light-emitting device array 42 to further irradiate in the lower area (refer to Figs. 5A-5B, Figs. 6A-6B, and Figs. 7A-7B described later). In thus achieving the ADB function, it is possible to achieve selective light irradiation by the light-emitting device array 42 where the surface area of the light-emitting units of the respective light-emitting devices is small in a region where light irradiation control at a high resolution is desired, and selective light irradiation by the light-emitting device arrays 40 and 41 where the surface area of the light-emitting units of the respective light-emitting devices is larger in a region where high resolution is not necessarily required. As a result, the number of light-emitting devices can be reduced while maintaining the required resolution for light irradiation control, making it possible to simplify the configuration of the apparatus that drives this matrix LED.

Further, the light-emitting device arrays 43 and 44 can be used to form a portion of the low beam that illuminates the relatively lower region of the space in front of the vehicle. Specifically, the low beam is formed by combining the light irradiated from the respective light-emitting device arrays 43 and 44 in the upper region of the light irradiated from other lamps and the like. At this time, the respective light-emitting devices 43a, 43b, and 43c included in the light-emitting device array 43 are selectively turned on and off in accordance with the travelling direction of the subject vehicle, making it possible to vary the position of the step area of the so-called cutoff line in the left-right direction. With this arrangement, an AFS function is achieved without using mechanical means. Note that while the above has described a light source apparatus that establishes both the ADB function and the AFS function, the AFS function may be separately and independently specialized from the ADB function by configuring the light source apparatus so that it comprises at least the light-emitting device array 43 only, or more preferably, further combines the light-emitting device array 43 with the light-emitting device array 44.

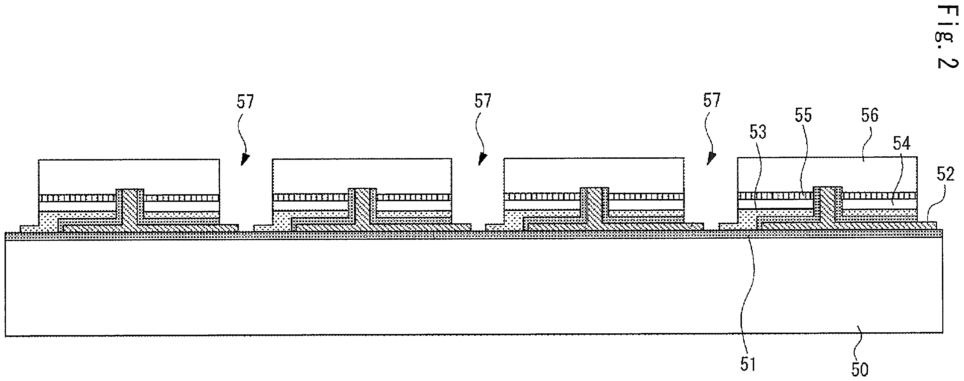

Fig. 2 is a schematic cross-sectional view showing a configuration example of the light-emitting devices included in the matrix LED. The figure shows the four light-emitting devices formed on one surface side of a support substrate 50. The support substrate 50 is a substrate comprising Si, Ge, AlN, SiC, Cu, Mo, W, and the like, for example. The respective light-emitting devices are configured to include an n-type electrode 52 and a p-type electrode 53 disposed on an insulating layer 51 made of SiO₂, SiN, and the like, a p-type GaN semiconductor layer 54 as a cladding layer layered on the p-type electrode 53, an InGaN semiconductor light-emitting layer 55 as an active layer layered on this p-type GaN semiconductor layer 54, and an n-type GaN semiconductor layer 56 as a cladding layer layered on this InGaN semiconductor light-emitting layer 55. The insulating layer 51 is sandwiched between the n-type electrode 52 and the p-type electrode 53, achieving electrical insulation. Further, the n-type electrode 52 passes through the p-type GaN semiconductor layer 54 and the InGaN semiconductor light-emitting layer 55, contacting the n-type GaN semiconductor layer 56. The insulating layer 51 is disposed between the p-type GaN semiconductor layer 54 and the InGaN semiconductor light-emitting layer 55, and the n-type electrode 52, achieving electrical insulation between both. A trench (groove) 57 for separating each is disposed between the respective light-emitting devices. According to the light-emitting devices of such a configuration example, it is possible to achieve a matrix LED comprising light-emitting units with various shapes and sizes such as shown in Fig. 1A described above.

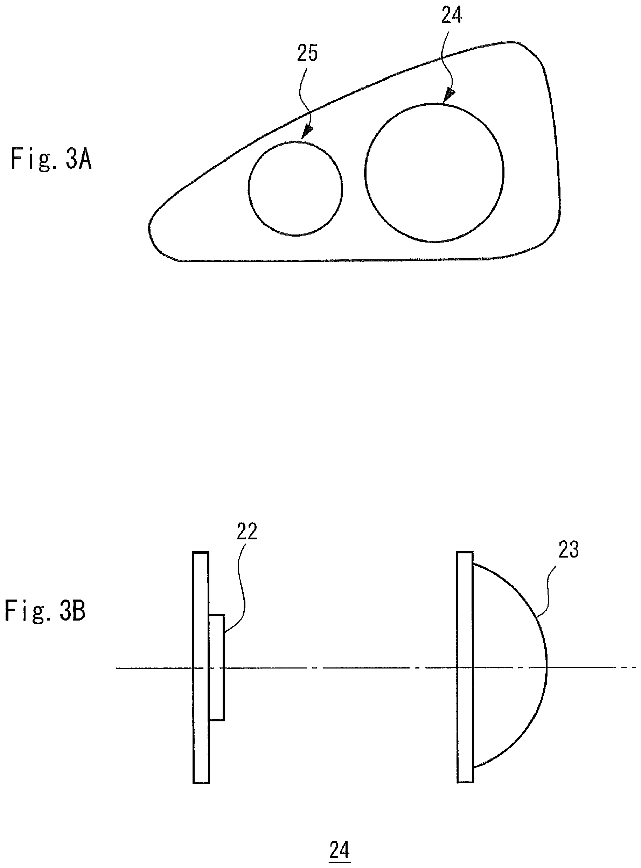

Fig. 3A is a schematic view showing a configuration example of the lamp unit. Further, Fig. 3B is a schematic view showing the optical configuration of the lamp unit disclosed in Fig. 3A. A lamp unit 20R (or 20L) shown in Fig. 3A comprises a high beam unit 24 for irradiating light on the relatively upper side of the space in front of the vehicle where the lamp unit 20R and the like are mounted, and a low beam unit 25 for irradiating light on the relatively lower side of the space in front of the vehicle. As shown in Fig. 3B, the high beam unit 24 comprises the matrix LED 22 described above and a lens 23 disposed on the front surface thereof, and forms a high beam by projecting the light emitted from the matrix LED 22 frontward by the lens 23. Note that while a detailed explanation of the configuration of the low beam unit 25 is omitted, various configurations such as a unit configured by combining an LED, lens, and the like, or a unit configured by combining a discharge bulb, shade, and the like, may be utilized.

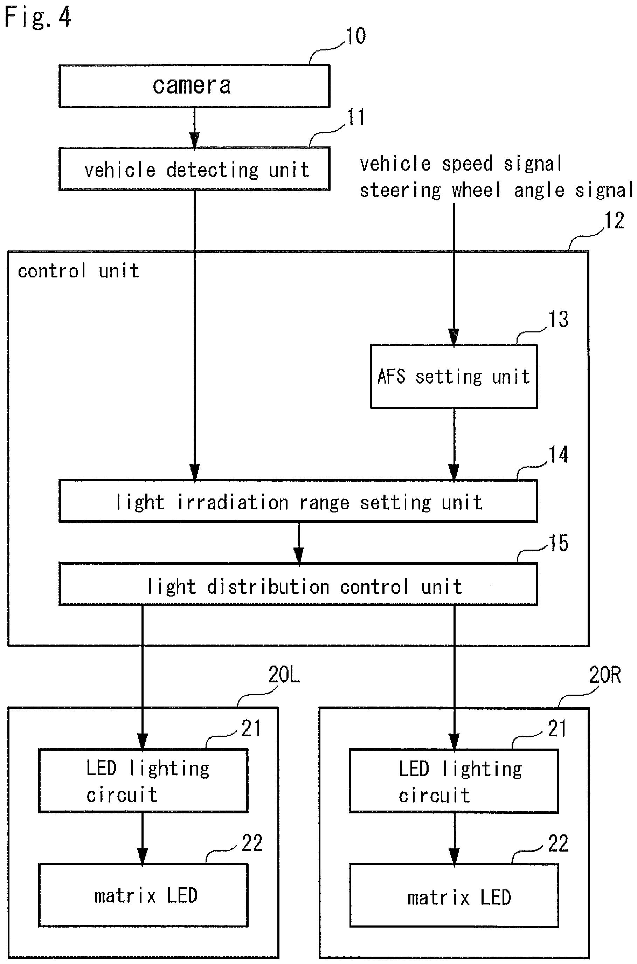

Fig. 4 is a block diagram showing the configuration of a vehicle headlamp system of an embodiment. The vehicle headlamp system shown in Fig. 4 sets a light distribution pattern based on an image obtained by taking an image of the space in front of the subject vehicle (target space) and irradiates light, and is configured to include a camera 10, a vehicle detecting unit 11, a control unit 12, and a pair of lamp units 20R and 20L. Note that the vehicle detecting unit 11 and the control unit 12 are equivalent to the lighting control apparatus, and the respective lamp units 20R and 20L are equivalent to the vehicle headlamps.

The camera 10 is installed in a predetermined position of the subject vehicle (near the inner rearview mirror, for example), takes an image of the space in front of the vehicle, and outputs the image (image data).

The vehicle detecting unit 11 detects the position of the forward vehicle by performing predetermined image processing using the image data output from the camera 10, and outputs the position information to the control unit 12. The term "forward vehicle" here refers to a preceding vehicle or an oncoming vehicle. This vehicle detecting unit 11 is achieved by executing a predetermined operation program in a computer system comprising a CPU, ROM, RAM, and the like, for example. The vehicle detecting unit 11 is integrally configured with the camera 10, for example. Note that the function of the vehicle detecting unit 11 may be achieved in the control unit 12.

The control unit 12 is achieved by executing a predetermined operation program in a computer system comprising a CPU, ROM, RAM, and the like, for example, and comprises an AFS setting unit 13, a light irradiation range setting unit 14 and a light distribution control unit 15 as function blocks.

The AFS setting unit (ON target setting unit) 13 variably sets the position of the step area of the cutoff line formed near the upper end of the low beam irradiation range in the left-right direction in accordance with the turning direction of the subject vehicle, based on a vehicle speed signal (vehicle speed information) and a steering wheel angle signal (steering wheel angle information) obtained from the subject vehicle. Specifically, the AFS setting unit 13 sets the light-emitting devices to be turned on among the respective light-emitting devices included in the light-emitting device array 43.

The light irradiation range setting unit 14 sets the light irradiation range corresponding to the position of the forward vehicle detected by the vehicle detecting unit 11. Further, the light irradiation range setting unit 14 sets the light irradiation range corresponding to the cutoff line position set by the AFS setting unit 13. Specifically, the light irradiation range setting unit 14 sets the area where the forward vehicle exists as a light non-irradiation range, and all other areas as the light irradiation range. Further, the light irradiation range setting unit 14 sets the region further on the left side than this cutoff line as the light irradiation range and the region further on the right side as the light non-irradiation range, in correspondence with the cutoff line position set by the AFS setting unit 13.

The light distribution control unit 15 generates a light distribution control signal corresponding to the light distribution pattern based on the light irradiation range and non-irradiation range set by the light irradiation range setting unit 14, and outputs the light distribution control signal to the respective lamp units 20R and 20L.

The lamp unit 20R is installed on the front right side of the subject vehicle, and is used to irradiate light that illuminates the area in front of the subject vehicle, and comprises an LED lighting circuit 21 and a matrix LED 22. Similarly, the lamp unit 20L is installed on the front left side of the subject vehicle, and is used to irradiate light that illuminates the area in front of the subject vehicle, and comprises the LED lighting circuit 21 and the matrix LED 22.

The LED lighting circuit 21 selectively turns on the respective LEDs by supplying a drive signal to the plurality of LEDs (light-emitting diodes) included in the matrix LED 22, based on the control signal output from the light distribution control unit 15.

As shown in Fig.1A, the matrix LED 22 comprises a plurality of LEDs, and each of the plurality of LEDs is selectively turned on based on the drive signal supplied from the LED lighting circuit 21. This the matrix LED 22 is capable of individually turning on each of the plurality of LEDs and controlling the light intensity (brightness) thereof.

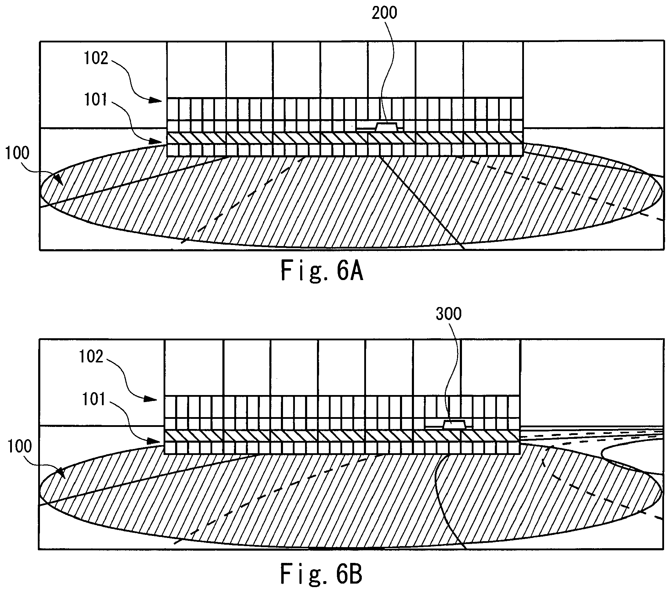

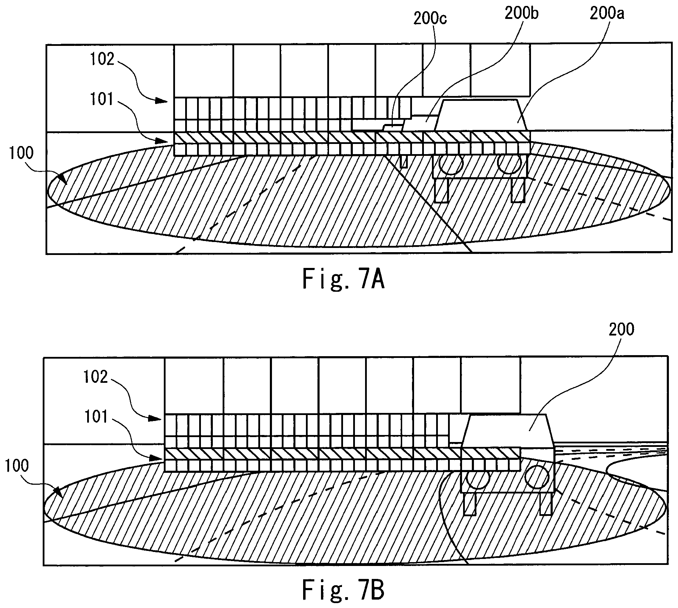

Fig. 5A and Fig. 5B are figures for explaining an example of a light distribution pattern formed by the vehicle headlamp system described above. Fig. 5A and Fig. 5B schematically show the state in front of the subject vehicle in a case where the subject vehicle is travelling on a road with two traffic lanes on one side and a forward vehicle 200 (oncoming vehicle in this example) exists in the opposite traffic lane (the same for Figs. 6A-6B and Figs. 7A-7B described later as well). The light distribution pattern shown in Fig. 5A comprises the low beam region 100 (the first irradiating light) formed by the respective low beam units 25 of the lamp units 20R and 20L, the cutoff region 101 (the second irradiating light) formed by the respective high beam units 24 of the lamp units 20R and 20L.

As shown in the figure, the cutoff region 101 is formed in the upper region of the low beam region 100 so that there is no space between the cutoff region 101 and the low beam region 100. Specifically, the cutoff region 101 is formed partially superimposed near the end area of the upper side of the low beam region 100, for example. A cutoff line with a relatively high left side and relatively low right side is formed on each side of the step area 110, on the upper side of the cutoff region 101. The height of this cutoff line is generally set so that the cutoff line is positioned lower than the upper side (generally the position of the windshield) of the forward vehicle 200. Note that, for ease of explanation, the high beam region is not shown.

As shown in Fig. 5A, the step area 110 of the cutoff line is disposed in the substantial center of the area in front of the subject vehicle during forward travelling. In contrast, as shown in Fig. 5B, when the subject vehicle is travelling on a curve that bends rightward, the step area 110 of the cutoff line is set in a position shifted further to the right side in accordance with the steering wheel angle. Note that, although not shown, when the subject vehicle is travelling on a curve that bends leftward, the step area 110 is set in a position shifted further to the left side in accordance with the steering wheel angle.

With such the step area 110 of the cutoff line variably set in accordance with the steering wheel angle, a state in which light irradiation is performed in the travelling direction of the subject vehicle is achieved. In particular, the respective light-emitting devices (refer to Fig. 1A) that contribute to the formation of the step area 110 of the cutoff line among the plurality of light-emitting devices of the matrix LED 22 are formed so as to comprise parallelogram-shaped light-emitting units with each of a pair of vertically opposite angles at 45° or isosceles triangle-shaped light-emitting units with two angles at a diagonal of 45°, thereby making it possible to directly generate a light irradiation line at a 45° angle in correspondence with the step area 110, without using a member such as a shade to shade the light. Further, the respective light-emitting devices of the light-emitting device array comprising the parallelogram-shaped or isosceles triangle-shaped light-emitting units are selectively caused to emit light, thereby making it possible to variably set the step area 110 of the cutoff line and thus achieve the AFS function without using mechanical components.

Fig. 6A and Fig. 6B are figures for explaining an example of a light distribution pattern formed by the vehicle headlamp system described above. The light distribution pattern shown in Fig. 6A comprises the low beam region 100 formed by the respective low beam units 25 of the lamp units 20R and 20L, the high beam region 102 formed by the respective high beam units 24 of the lamp units 20R and 20L, and the cutoff region 101 formed by the respective high beam units 24 of the lamp units 20R and 20L. Then, a portion of the high beam region 102 is set as the light non-irradiation range (shaded range) in accordance with the respective positions of a forward vehicle 200, which is an oncoming vehicle, or more specifically, a position in the upper region (generally the position of the windshield) of this forward vehicle 200. Similarly, according to the light distribution pattern shown in Fig. 6B, a portion of the high beam region 102 is set as the light non-irradiation range (shaded range) in accordance with the position of the preceding vehicle 300 driving on a curve that bends rightward, or more specifically, a position in the upper region (generally the position of the rear window) of this forward vehicle 300.

Fig. 7A and Fig. 7B are figures for explaining an example of a light distribution pattern formed by the vehicle headlamp system described above. The light distribution pattern shown in Fig. 7A comprises the low beam region 100 formed by the respective low beam units 25 of the lamp units 20R and 20L, the cutoff region 101 formed by the respective high beam units 24 of the lamp units 20R and 20L, and the high beam region 102 formed by the respective high beam units 24 of the lamp units 20R and 20L. Then, a portion of the high beam region 102 is set as the light non-irradiation range (shaded range) in accordance with the respective positions of three forward vehicles 200a, 200b, and 200c, which are oncoming vehicles, or more specifically, a position in the upper region (generally the position of the windshield) of these forward vehicles 200a, 200b, and 200c. Similarly, according to the light distribution pattern shown in Fig. 7B, a portion of the high beam region 102 is set as the light non-irradiation range (shaded range) in accordance with the position of the forward vehicle 200 that is travelling in the opposing traffic lane on a curve that bends rightward, or more specifically, a position in the upper region (generally the position of the windshield) of this forward vehicle 200.

Note that the present invention may be utilized with a double lamp type headlamp if the high beam unit 24 and the low beam unit 25 are incorporated into a single lamp unit. A high beam light distribution can be created if all high beam units 24 and low beam units 25 are turned on. Further, a low beam light distribution can be created if the cutoff line is formed by the light-emitting device arrays 43 and 44 of the high beam unit 24 and the low beam unit 25 is simultaneously irradiated.

Note that this invention is not limited to the subject matter of the foregoing embodiments, and can be implemented by being variously modified within the scope of the present invention as defined by the appended claims. For example, while the position information of a pedestrian and a forward vehicle is obtained by angles in the embodiments described above, the position information may be expressed by two-dimensional coordinates.

## Claims

1. A vehicle headlamp for forming a low beam that illuminates a relatively lower region of a space in front of a vehicle, comprising:
a first light source apparatus (40, 41, 42) for forming a first irradiating light,
a second light source apparatus (43, 44) for forming a second irradiating light with a width in the up-down direction that is smaller than that of the first irradiating light on an upper end side of the first irradiating light, and
a lens (23) that projects the light emitted from the first light source apparatus (40, 41, 42) and the second light source apparatus (43, 44), respectively,
wherein the first light source apparatus (40, 41, 42) comprises at least one light-emitting device array (40) that extends in a first direction (x);
wherein the second light source apparatus (43, 44) comprises a first light-emitting device array (43) that extends in the first direction (x), and
wherein the first light-emitting device array (43) comprises a plurality of light-emitting devices (43a, 43b, 43c) capable of being individually turned on and off, arranged along the first direction (x);
wherein the plurality of light-emitting devices (43a, 43b, 43c) of the first light-emitting device array (43) comprise an outline that includes an edge that extends obliquely with regard to the first direction (x);
**characterized in that**
in the plurality of light-emitting devices (43a, 43b, 43c) of the first light-emitting device array (43), one triangle-shaped first light-emitting device (43c), a plurality of second
parallelogram-shaped light-emitting devices (43a) that are mutually equal in shape and surface area, and one triangle-shaped third light-emitting device (43b) are arranged as a set and disposed inside the range of the width corresponding to one fourth light-emitting device (40b) of said light-emitting device array (40) of said first light source apparatus (40, 41, 42).

2. The vehicle headlamp according to claim 1,
wherein the second irradiating light is formed so that at least a portion thereof is superimposed on an upper end side of the first irradiating light.

3. The vehicle headlamp according to claim 1 or 2,
wherein the second light source apparatus (43, 44) further includes a second light-emitting device array (44) adjacent to the first light-emitting device array (43) in a second direction (y) that crosses the first direction (x), and
the second light-emitting device array (44) comprises a plurality of light-emitting devices (44a) disposed along the first direction (x).

4. A vehicle headlamp system comprising:
the vehicle headlamp described in any one of claims 1 to 3,
an ON target setting unit (13) that is adapted to:
obtain at least steering wheel angle information from the vehicle, and
set respective light-emitting devices to be turned on among the respective light-emitting devices (43a, 43b, 43c) of the first light-emitting device array (43) in accordance with the turning direction of the vehicle based on the steering wheel angle information, and
an ON/OFF control unit (14) that is adapted to execute control for turning on the light-emitting devices (43a, 43b, 43c) to be turned on as set by the ON target setting unit (13) and turning off all other light-emitting devices.

## Patentansprüche

1. Fahrzeugscheinwerfer zum Bilden eines Abblendlichts, der einen relativ tiefen Bereich in einem Raum vor einem Fahrzeug beleuchtet, der Folgendes aufweist:
eine erste Lichtquellenvorrichtung (40, 41, 42) zum Bilden eines ersten Bestrahlungslichts,
eine zweite Lichtquellenvorrichtung (43, 44) zum Bilden eines zweiten Bestrahlungslichts mit einer Breite in der Auf-Ab-Richtung, die kleiner als die des ersten Bestrahlungslichts ist, auf einer oberen Endseite des ersten Bestrahlungslichts, und
eine Linse (23), die das Licht, das von der ersten Lichtquellenvorrichtung (40, 41, 42) bzw. der zweiten Lichtquellenvorrichtung (43, 44) emittiert wird, projiziert,
wobei die erste Lichtquellenvorrichtung (40, 41, 42) zumindest eine Leuchtvorrichtungsanordnung (40) aufweist, die sich in einer ersten Richtung (x) erstreckt;
wobei die zweite Lichtquellenvorrichtung (43, 44) eine erste Leuchtvorrichtungsanordnung (43) aufweist, die sich in der ersten Richtung (x) erstreckt, und
wobei die erste Leuchtvorrichtungsanordnung (43) eine Vielzahl von Leuchtvorrichtungen (43a, 43b, 43c) aufweist, die einzeln angeschaltet und abgeschaltet werden können, die entlang der ersten Richtung (x) angeordnet sind;
wobei die Vielzahl von Leuchtvorrichtungen (43a, 43b, 43c) der ersten Leuchtvorrichtungsanordnung (43) einen Umriss aufweist, der eine Kante aufweist, die sich schräg in Bezug auf die erste Richtung (x) erstreckt;
**dadurch gekennzeichnet, dass**
in der Vielzahl von Leuchtvorrichtungen (43a, 43b, 43c) der ersten Leuchtvorrichtungsanordnung (43) eine dreieckige, erste Leuchtvorrichtung (43c), eine Vielzahl von zweiten, parallelogrammförmigen Leuchtvorrichtungen (43a), die jeweils in Form und Oberflächenbereich gleich sind, und eine dreieckige, dritte Leuchtvorrichtung (43b) als ein Satz angeordnet und innerhalb des Bereichs der Breite angeordnet sind, die einem Viertel der Leuchtvorrichtung (40b) der Leuchtvorrichtungsanordnung (40) der ersten Lichtquellenvorrichtung (40, 41, 42) entspricht.

2. Fahrzeugscheinwerfer gemäß Anspruch 1,
wobei das zweite Bestrahlungslicht so gebildet ist, dass zumindest ein Teil von diesem auf eine obere Endseite des ersten Bestrahlungslichts überlagert ist.

3. Fahrzeugscheinwerfer gemäß Anspruch 1 oder 2,
wobei die zweite Lichtquellenvorrichtung (43, 44) ferner eine zweite Leuchtvorrichtungsanordnung (44) benachbart zu der ersten Leuchtvorrichtungsanordnung (43) in einer zweiten Richtung (y) aufweist, die die erste Richtung (x) kreuzt, und
die zweite Leuchtvorrichtungsanordnung (44) eine Vielzahl von Leuchtvorrichtungen (44a) aufweist, die entlang der ersten Richtung (x) angeordnet ist.

4. Fahrzeugscheinwerfersystem, das Folgendes aufweist:
den Fahrzeugscheinwerfer, der in einem der Ansprüche 1 bis 3 beschrieben ist,
eine AN-Zieleinstellungseinheit (13), die ausgelegt ist, zum:
Erhalten von zumindest einer Lenkradwinkelinformation von dem Fahrzeug; und
Einstellen entsprechender Leuchtvorrichtungen, die innerhalb der entsprechenden Leuchtvorrichtungen (43a, 43b, 43c) der ersten Leuchtvorrichtungsanordnung (43) gemäß der Drehrichtung des Fahrzeugs basierend auf der Lenkradwinkelinformation angeschaltet werden sollen, und
eine AN/AUS-Steuereinheit (14), die geeignet ist, die Steuerung zum Anschalten der Leuchtvorrichtungen (43a, 43b, 43c), die gemäß Einstellung durch die AN-Zieleinstellungseinheit (13) angeschaltet werden sollen, und zum Abschalten sämtlicher anderer Leuchtvorrichtungen auszuführen.

## Revendications

1. Phare de véhicule pour former un feu de croisement qui éclaire une région relativement faible d'un espace situé devant un véhicule, comprenant :
un premier appareil source de lumière (40, 41, 42) pour former une première lumière d'éclairage,
un deuxième appareil source de lumière (43, 44) pour former une deuxième lumière d'éclairage ayant une largeur dans la direction de haut en bas qui est inférieure à celle de la première lumière d'éclairage sur une extrémité supérieure de la première lumière d'éclairage, et
une lentille (23) qui projette la lumière émise par le premier appareil source de lumière (40, 41, 42) et par le deuxième appareil source de lumière (43, 44), respectivement,
le premier appareil source de lumière (40, 41, 42) comprenant au moins un réseau de dispositifs émettant de la lumière (40) qui s'étend dans une première direction (x) ;
le deuxième appareil source de lumière (43, 44) comprenant un premier réseau de dispositifs émettant de la lumière (43) qui s'étend dans la première direction (x), et
le premier réseau de dispositifs émettant de la lumière (43) comprenant une pluralité de dispositifs émettant de la lumière (43a, 43b, 43c) pouvant être individuellement allumés et éteints, disposés le long de la première direction (x) ;
la pluralité de dispositifs émettant de la lumière (43a, 43b, 43c) du premier réseau de dispositifs émettant de la lumière (43) ayant un contour qui comprend un bord qui s'étend de manière oblique par rapport à la première direction (x) ;
**caractérisé en ce que**
parmi la pluralité de dispositifs émettant de la lumière (43a, 43b, 43c) du premier réseau de dispositifs émettant de la lumière (43), un premier dispositif émettant de la lumière en forme de triangle (43c), une pluralité de deuxièmes dispositifs émettant de la lumière en forme de parallélogramme (43a) qui sont mutuellement identiques en termes de forme et de valeur de surface et un troisième dispositif émettant de la lumière en forme de triangle (43b) sont agencés sous forme d'un ensemble et disposés dans l'étendue de la largeur correspondant à un quatrième dispositif émettant de la lumière (40b) dudit réseau de dispositifs émettant de la lumière (40) dudit premier appareil source de lumière (40, 41, 42).

2. Phare de véhicule selon la revendication 1, dans lequel la deuxième lumière d'éclairage est formée de sorte qu'au moins une partie de celle-ci se superpose à une extrémité supérieure de la première lumière d'éclairage.

3. Phare de véhicule selon la revendication 1 ou 2, dans lequel le deuxième appareil source de lumière (43, 44) comprend en outre un deuxième réseau de dispositifs émettant de la lumière (44) adjacent au premier réseau de dispositifs émettant de la lumière (43) dans une deuxième direction (y) qui croise la première direction (x), et dans lequel
le deuxième réseau de dispositifs émettant de la lumière (44) comprend une pluralité de dispositifs émettant de la lumière (44a) disposés le long de la première direction (x).

4. Système de phare de véhicule comprenant :
le phare de véhicule décrit dans l'une quelconque des revendications 1 à 3,
une unité de définition de cible ON (13) adapté à :
obtenir au moins une information d'angle de volant de direction du véhicule, et
régler les dispositifs émettant de la lumière respectifs à allumer parmi les dispositifs émettant de la lumière (43a, 43b, 43c) du premier réseau de dispositifs respectifs émettant de la lumière (43) en fonction de la direction de virage du véhicule sur la base des informations d'angle du volant de direction, et
une unité de commande ON/OFF (14) adapté à exécuter une commande propre à allumer les dispositifs émettant de la lumière (43a, 43b, 43c) à allumer tels que définis par l'unité de définition de cible ON (13) et à éteindre tous les autres dispositifs émettant de la lumière.
